# FASCICULE DE BREVET EUROPEEN

(11) **EP 1 675 985 B1**
(45) Date de publication et mention de la délivrance du brevet: **26.03.2014**
(21) Numéro de dépôt: 04787308.8
(22) Date de dépôt: 03.09.2004
(51) Int. Cl.: D03D 15/00, G02B 6/00

(54) **PROCEDE DE FABRICATION D'UN TISSU A BASE DE FIBRES OPTIQUES ET UN TISSU A BASE DE FIBRES OPTIQUES**
VERFAHREN ZUR HERSTELLUNG VON FASERGLASGEWEBE UND FASERGLASGEWEBE
METHOD FOR PRODUCING FIBREGLASS TISSUE AND FIBERGLASS TISSUE

(30) Priorité: 11.09.2003 FR 0310700; 22.06.2004 FR 0406784
(43) Date de publication de la demande: 05.07.2006
(73) Titulaire: Brochier Technologies, 69001 Lyon (FR)
(72) Inventeur: BROCHIER, Cédric, F-69007 Lyon (FR); PITON, Jean, F-69004 Lyon (FR)
(74) Mandataire: Vuillermoz, Bruno
(86) Numéro de dépôt international: PCT/FR2004/002253
(87) Numéro de publication internationale: WO 2005/026423

(56) Documents cités:
- WO-A-02/12785
- DE-A- 10 206 613
- US-A- 4 234 907
- US-A- 5 183 323

## Description

La présente invention concerne un procédé de fabrication d'un tissu comportant des fibres optiques, plus particulièrement un procédé de tissage de type Jacquard.

Des textiles comportant des fibres optiques sont connus et ont été développés par le passé, par exemple grâce à la technique du tricotage. De tels textiles ont été décrits notamment dans les demandes de brevet US 5 021 928, US 5 183 323, GB 2 305 848, et WO 02/12785.

Ces textiles connus contiennent des fibres optiques qui peuvent être illuminées à partir de l'une de leurs extrémités jouant le rôle de portion d'alimentation, afin de rendre la pièce de tissu correspondant lumineuse. Dans ces textiles lumineux, les fibres optiques constituent les fils de trame et ou les fils de chaîne, et sont éventuellement associées à des fibres classiques, par exemple du coton, du lin, de la soie, ou des fibres textiles synthétiques.

Les textiles lumineux à base de fibres optiques qui ont été développés jusqu'à présent n'ont jamais été l'objet d'une fabrication industrielle. En effet, il n'est possible de connecter à une source lumineuse - une diode électroluminescente, par exemple - qu'un nombre déterminé de fibres, par exemple cinq cent.

Il est donc nécessaire de compter les fibres optiques, de loin en loin sur les bords du tissu, avant de les regrouper et de connecter leurs extrémités dites "extrémités d'alimentation" à une source lumineuse.

Ceci est encore plus vrai lorsque les sources lumineuses connectées à des groupes - ou faisceaux - de fibres optiques différents, sont de nature différente - par exemple de puissance, ou de couleur différente -.

Jusqu'à présent, aucun procédé de tissage de fibres optiques, n'a proposé de solution industrielle de séparation et de repérage des faisceaux de fibres optiques indépendants dans un tissu, et/ou de séparation et de repérage des faisceaux de fibres optiques par rapport aux fils textiles formant le fond du tissu.

Jusqu'à aujourd'hui, il était nécessaire de réaliser une séparation et un regroupement des extrémités d'alimentation des différentes fibres d'un faisceau à la main, ce qui est très long et fastidieux, et clairement incompatible avec une production en quantités industrielles.

Le but de la présente invention est donc de répondre aux limitations des textiles à base de fibres optiques déjà connus, en fournissant un procédé de tissage de fibres optiques, permettant la séparation et l'identification quasi automatique des extrémités d'alimentation des différentes fibres constitutives d'un faisceau indépendant, par rapport aux autres faisceaux du tissu, en vue de leur connexion facile à des sources lumineuses correspondant à chaque faisceau indépendant.

Les objectifs cités ci-dessus sont atteints avec un procédé de tissage d'un tissu comportant, au moins pour partie, des fibres optiques comme fils de chaîne et/ou de trame, lesdites fibres optiques étant traitées de manière à laisser diffuser la lumière sensiblement perpendiculairement à leur axe longitudinal, et au moins dans leurs portions situées du côté extérieur du tissu, caractérisé en ce qu'il comprend le tissage d'un motif Jacquard formant matrice de séparation et d'identification, par rapport aux fils adjacents, des extrémités d'alimentation d'un nombre prédéterminé de fibres optiques destinées à être regroupées en faisceau et connectées à la même source lumineuse.

Pour la réalisation d'une matrice de repérage, on aura compris qu'il est nécessaire de former un dessin plus ou moins complexe, faisant notamment intervenir des flottés de fils. Seule la technique Jacquard permet d'obtenir un tel dessin complexe pour la matrice, et un tissage simple ne conviendrait pas.

Par "faisceau", on entend un groupe de fibres optiques tissées les unes à côté des autres, et formant un motif Jacquard commun apparaissant à la surface du tissu.

Par "flotté", on entend la partie d'une fibre, textile ou optique, tissée en trame qui est laissée libre et ne croise pas des fils de chaîne, ou à l'inverse la partie d'une fibre de chaîne qui ne croise pas de fils de trame. Dans le cadre de l'invention, les portions d'alimentation des fibres optiques sont laissées flottantes (les flottés pouvant éventuellement être liés par commodité), afin de pouvoir ultérieurement au tissage, les couper et les connecter à des sources lumineuses.

Pour plus de clarté, on définit un sens du tissu dans la direction de chaîne. On prend comme référence le sens de défilement du tissu en sortie de métier à tisser. Ainsi, le tissu déjà fabriqué représente l'aval, et le tissu en cours de fabrication représente l'amont.

Le tissage d'un dessin Jacquard avec les extrémités d'alimentation des différents faisceaux de fibres optiques permet de séparer et d'identifier les extrémités des différents faisceaux dans l'espace, les uns par rapport aux autres. Ainsi, la connexion de chacun de ces faisceaux, chacun à une source lumineuse spécifique, sera possible industriellement, et éventuellement de manière automatisée.

Lorsque le tissage utilise des fibres optiques comme fils de trame, le tissage Jacquard des extrémités d'alimentation des différents faisceaux de fibres optiques indépendants tissés en trame fait, selon une variante avantageuse de l'invention ressortir les extrémités d'alimentation de chaque faisceau de ces fibres d'un côté prédéterminé et distinct du tissu par rapport aux fils adjacents, et/ou à une distance prédéterminée et distincte du premier fil de chaîne situé entre un dessin et la matrice qui lui correspond, et adjacent à celle-ci.

De manière similaire, lorsque le tissage utilise des fibres optiques comme fils de chaîne, le tissage Jacquard des extrémités d'alimentation de chaque faisceau de fibres optiques tissées en chaîne fait, selon une variante avantageuse de l'invention, ressortir les extrémités d'alimentation de ces fibres d'un côté prédéterminé et distinct du tissu par rapport aux fils adjacents, et/ou à une distance prédéterminée et distincte du premier fil de trame situé en aval de la matrice et adjacent à celle-ci.

Avantageusement, le procédé selon l'invention comporte en outre, après l'étape de tissage, les étapes consistant, dans l'ordre, à:
(i) réaliser un regroupement des extrémités d'alimentation de fibres optiques pour chaque faisceau particulier présent dans le tissu, puis
(ii) réaliser un sertissage des extrémités d'alimentation pour chaque faisceau, puis
(iii) réaliser une découpe des extrémités d'alimentation pour chaque faisceau, à l'aide d'un couteau chaud, puis
(iv) réaliser une connexion de chaque faisceau de fibres optiques à une source lumineuse.

L'invention concerne également un tissu comportant, en chaîne et/ou en trame, des fibres optiques éventuellement mélangées à des fibres textiles naturelles ou artificielles, lesdites fibres optiques étant traitées de manière à laisser diffuser la lumière sensiblement perpendiculairement à leur axe longitudinal, et au moins dans leurs portions situées du côté extérieur du tissu, caractérisé en ce qu'il comporte dans sa chaîne et/ou dans sa trame, au moins un faisceau de fibres optiques destinées à être connectées à une source lumineuse commune par leurs extrémités d'alimentation, et comporte également des moyens de repérage et de séparation des extrémités d'alimentation des fibres optiques dudit faisceau.

Les moyens de repérage et de séparation des extrémités d'alimentation des fibres optiques tissées en chaîne formant chaque faisceau, par rapport aux fils adjacents, peuvent consister en un motif Jacquard dans le dessin de tissu, formant matrice de séparation des fibres appartenant à chaque faisceau, motif tissé à partir des portions d'alimentation du faisceau, de telle manière que ces dernières ressortent d'un côté du tissu prédéterminé et distinct du côté où ressortent les fils de chaîne adjacents, et/ou à une distance prédéterminée et distincte du premier fil de trame situé en amont de la matrice et adjacent à celle-ci.

Les moyens de repérage et de séparation des extrémités d'alimentation des fibres optiques tissées en chaîne formant chaque faisceau, par rapport aux fils adjacents du tissu, peuvent également consister en un motif Jacquard dans le dessin de tissu, formant matrice de séparation des fibres appartenant à chaque faisceau, les portions d'alimentation étant tissées dans la matrice de repérage, chacune avec un fil textile de chaîne adjacent, de couleur prédéterminée, chaque couleur de fil de chaîne correspondant à un faisceau particulier de fibres optiques.

Les moyens de repérage et de séparation des extrémités d'alimentation des fibres optiques tissées en trame et formant chaque faisceau, par rapport aux fils adjacents du tissu, peuvent aussi consister en un motif Jacquard dans le dessin de tissu, et/ou en lisière du tissu, formant matrice de séparation des fibres appartenant à chaque faisceau, motif tissé à partir des portions d'alimentation du faisceau de telle manière que ces dernières ressortent d'un côté du tissu prédéterminé et distinct du côté où ressortent les fils de trame adjacents, et/ou à une distance prédéterminée et distincte du premier fil de chaîne situé entre le dessin et la matrice qui correspond à ce dessin, et adjacent à celle-ci.

Enfin, les moyens de repérage et de séparation des extrémités d'alimentation des fibres optiques tissées en trame et formant chaque faisceau, par rapport aux fils adjacents du tissu, peuvent consister en un motif Jacquard dans le dessin de tissu et/ou en lisière du tissu, formant matrice de séparation des fibres appartenant à chaque faisceau, les portions d'alimentation étant tissées dans la matrice de repérage, chacune avec un fil textile de trame de couleur prédéterminée, chaque couleur de fil de trame correspondant à un faisceau particulier de fibres optiques.

Autrement dit, l'invention vise notamment un procédé de tissage d'un tissu comportant des fibres optiques utilisées au moins partiellement comme fil de trame, et des fils naturels et/ou artificiels utilisés comme fils de chaîne, lesdites fibres optiques étant traitées après leur tissage de manière à laisser diffuser la lumière sensiblement perpendiculairement à leur axe longitudinal, et au moins dans leurs portions situées du côté extérieur du tissu, caractérisé en ce qu'il un procédé de tissage Jacquard, faisant intervenir au moins deux réseaux - ou faisceaux - de fibres optiques indépendants, ledit procédé comprenant la séparation et l'identification des différents réseaux de fibres optiques indépendants au cours du tissage.

La séparation et l'identification des différents réseaux de fibres indépendants, peuvent consister en un tissage Jacquard de la lisière de tissu, les portions d'alimentation des différents faisceaux de fibres optiques étant tissées pour ressortir chacune d'un côté du tissu prédéterminé et distinct, et/ou chacune à une distance par rapport à la bordure du tissu, prédéterminée et distincte des autres faisceaux, sous forme d'un flotté.

Alternativement, la séparation et l'identification des différents réseaux de fibres indépendants, peuvent consister en un tissage Jacquard du rapport - ou dessin - de tissu Jacquard, les portions d'alimentation des différents faisceaux de fibres optiques étant tissées pour ressortir chacune d'un côté du tissu prédéterminé et distinct, et/ou chacune à une distance par rapport à la bordure du tissu, prédéterminée et distincte des autres faisceaux, sous forme d'un flotté.

L'invention vise également un tissu comportant des fibres optiques utilisées au moins partiellement comme fil de trame, et des fils naturels et/ou artificiels utilisés comme fils de chaîne, lesdites fibres optiques étant traitées après leur tissage de manière à laisser diffuser la lumière sensiblement perpendiculairement à leur axe longitudinal, et au moins dans leurs portions situées du côté extérieur du tissu, caractérisé en ce qu'il s'agit d'un tissu Jacquard comportant dans sa trame au moins deux faisceaux de fibres optiques distinctes, et des moyens de repérage et de séparation desdits faisceaux entre eux.

Les moyens de repérage et de séparation des faisceaux de fibres entre eux peuvent consister en un motif Jacquard dans la lisière de tissu, les portions d'alimentation des différents faisceaux de fibres optiques étant tissées pour ressortir chacune d'un côté prédéterminé et distinct du tissu, et/ou chacune à une distance par rapport à la bordure du tissu, prédéterminée et distincte des autres faisceaux, sous forme d'un flotté.

Alternativement, les moyens de repérage et de séparation des faisceaux de fibres entre eux peuvent aussi consister en un motif Jacquard dans le rapport - ou dessin - de tissu Jacquard, les portions d'alimentation des différents faisceaux de fibres optiques étant tissées pour ressortir chacune d'un côté du tissu prédéterminé et distinct, et/ou chacune à une distance par rapport à la bordure du tissu, prédéterminée et distincte des autres faisceaux, sous forme d'un flotté.

L'invention va à présent être décrite plus en détail à l'aide du dessin schématique annexé, qui représente à titre d'exemples non limitatifs, plusieurs formes d'exécution d'un tissu obtenu à l'aide du procédé de tissage selon l'invention.
Figure 1 est une vue schématique de dessus d'un tissu uni comprenant des fibres textiles en chaîne et des fibres optiques de même couleur en trame ;
Figure 2 est une vue schématique en coupe selon II/II de figure 1;
Figure 3 est une vue schématique de dessus d'un tissu à motif comprenant en chaîne des fibres textiles, et des fibres optiques de même couleur formant le dessin en trame, la matrice de repérage étant disposée en lisière et dans le tissu ;
Figure 4 est une vue schématique en coupe selon IV/IV de figure 2;
Figure 5 est une vue schématique de dessus d'un tissu à motif comprenant des fibres textiles en chaîne, et des fibres optiques de deux couleurs séparées formant le dessin en trame ;
Figure 6 est une vue schématique en coupe selon VI/VI de figure 5;
Figure 7 est une vue schématique de dessus similaire à figure 3, la matrice de repérage étant disposée uniquement en lisière du tissu ;
Figure 8 est une vue schématique en coupe selon VIII/VIII de figure 7;
Figure 9 est une vue schématique de dessus similaire à figure 5, la matrice de repérage étant disposée uniquement en lisière du tissu ;
Figure 10 est une vue schématique en coupe selon X/X de figure 9;
Figure 11 est une vue schématique de dessus d'un tissu uni comprenant des fibres textiles en trame et des fibres optiques de même couleur en chaîne ;
Figure 12 est une vue schématique en coupe selon XII/XII de figure 11;
Figure 13 est une vue schématique de dessus d'un tissu à motif comprenant des fibres textiles en trame, et des fibres optiques de même couleur formant le dessin en chaîne, la matrice de repérage étant disposée en aval du dessin ;
Figure 14 est une vue schématique en coupe selon XIV/XIV de figure 13 ;
Figure 15 est une vue schématique de dessus d'un tissu à motif comprenant des fibres textiles en trame, et des fibres optiques de deux couleurs séparées formant le dessin en chaîne ;
Figure 16 est une vue schématique en coupe selon XVI/XVI de figure 15 ;
Figure 17 est une vue schématique de dessus d'un tissu comportant des fibres optiques de même couleur en trame, et des fibres optiques de même couleur en chaîne, les couleurs en chaîne et en trame étant différentes ;
Figure 18 est une vue schématique en coupe selon XVIII/XVIII de figure 17 ;
Figure 19 est une vue schématique de dessus d'un tissu comportant des fibres optiques de deux couleurs différentes en trame, et des fibres optiques de deux couleurs différentes en chaîne ;
Figure 20 est une vue schématique en coupe selon XX/XX de figure 19 ;
Figure 21 est une vue schématique en coupe selon XXI/XXI de figure 19.

Dans les différentes figures du dessin ci-annexé, on a représenté, lorsque cela était nécessaire, les différents types de fibre optique en chaîne, ou en trame, avec des traits d'épaisseur différente.

De plus, dans les différentes figures du dessin supportant la description qui suit, on a volontairement représenté les différents fils, en chaîne et en trame, espacés les uns des autres, afin que le trajet de ces fils les uns par rapport aux autres, soit plus compréhensible.

De même, dans certaines figures, les fils, en chaîne ou en trame, qui sont des fils textiles (coton, soie, ou autres) autres que des fibres optiques, ont été volontairement supprimés pour plus de lisibilité.

On notera qu'en pratique, ces fils font partie du tissage, et que les différents fils adjacents, textiles ou fibres optiques, constituant la chaîne et la trame du tissu final, sont en fait en contact les uns par rapport aux autres.

Le procédé de tissage selon l'invention est un procédé de tissage Jacquard, bien connu en soi par l'homme du métier, et qui ne sera donc pas décrit plus en détail dans le cadre de la présente description.

Le procédé classique de tissage Jacquard est adapté au tissage de fibres optiques, moins souples que des fils textiles traditionnels, notamment par la réduction de la vitesse de certaines parties mobiles du métier à tisser. Une telle réduction de vitesse peut être choisie de manière appropriée par l'homme du métier, par exemple en choisissant des motoréducteurs dont la vitesse de rotation est inférieure à celle des motoréducteurs de métier Jacquard classiques.

Le procédé selon la présente invention utilise des fils de chaîne et de trame qui peuvent être, selon les cas: premièrement, en matière naturelle ou artificielle, de qualité textile, par exemple des fils à base de coton, laine, soie, ou à base polyamide, ou encore des fils métalliques, deuxièmement des fibres optiques, ou troisièmement une alternance d'un certain nombre de fibres textiles et de fibres optiques, formant les fils de chaîne et/ou de trame du tissu.

La surface des fibres optiques est traitée de manière à laisser passer les rayons lumineux dans une direction sensiblement perpendiculaire à l'axe longitudinal de la fibre, au moins au niveau de certaines portions de celle-ci. Le traitement de surface des fibres est réalisé après leur tissage.

Selon le procédé de tissage de l'invention, les portions lumineuses des fibres - c'est-à-dire les portions dont la surface est traitée pour laisser diffuser la lumière - sont situées du côté extérieur du tissu.

Comme cela est expliqué en préambule, seul un nombre limité de fibres optiques peut être connecté à une seule source lumineuse. Cette source lumineuse pourra être choisie de la manière la plus appropriée, et sera par exemple une diode électroluminescente (ou "LED"). Un groupe de fibres destinées à être connectés à la même source lumineuse est, dans la présente description, dénommé "faisceau".

Dans le cas où les fibres optiques présentes en chaîne sont destinées à être connectées à des sources lumineuses de même intensité et de même couleur, le procédé de tissage selon l'invention fournit un moyen de les compter, de regrouper un nombre déterminé de fibres adjacentes en faisceau, et de séparer dans l'espace chaque faisceau de fibres ainsi constitué, par rapport aux autres fils du tissu (que ceux-ci soient des fibres optiques appartenant à d'autres faisceaux, ou que ce soient des fibres de qualité textile).

De même pour les fibres optiques tissées en trame.

Dans le cas où les fibres optiques présentes dans la chaîne sont destinées à être connectées à des sources lumineuses de couleur et/ou d'intensité différentes, le procédé selon l'invention permet également de compter, et de regrouper ces fibres en faisceaux, chaque faisceau étant séparé dans l'espace par rapport aux autres fils du tissu (que ceux-ci soient des fibres optiques appartenant à d'autres faisceaux, ou que ce soient des fibres de qualité textile).

De même pour les fibres optiques en trame.

On peut éventuellement compléter le repérage dans l'espace par une association d'un fil de qualité textile de couleur déterminée pour chaque faisceau de couleur différente qui est tissé de manière adjacente aux fibres constituant un faisceau, de manière à faciliter encore le repérage des différents faisceaux indépendants les uns des autres, par un code couleur associé

Différentes variantes de tissus obtenus à l'aide d'un procédé de tissage selon l'invention vont à présent être décrits.

On notera que, le cas échéant, les différentes couleurs de fils sont représentées par des traits d'épaisseur différents.

Dans toutes les figures où le tissu est représenté à plat, on a représenté l'orientation du tissu en sens chaîne "C" et trame "T".

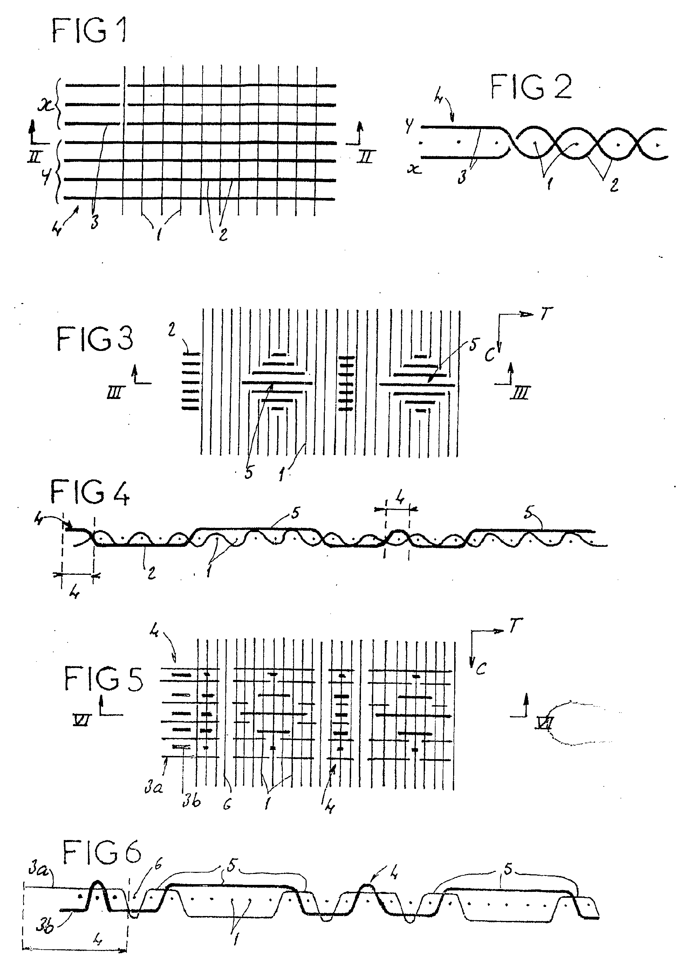

La Figure 1 montre un tissu uni dans lequel tous les fils de chaîne 1 sont des fibres textiles (de même couleur ou non), et tous les fils de trame 2 sont des fibres optiques dont les extrémités d'alimentation 3 sont toutes reliées à des sources lumineuses (non illustrées au dessin) de couleur et d'intensité identique.

Le comptage des fibres optiques en trame, en vue de leur regroupement en faisceaux, et de la connexion ultérieure de chaque faisceau d'un nombre déterminé de fibres à une source lumineuse correspondant audit faisceau, est réalisé grâce au tissage Jacquard en lisière de tissu, d'un motif (ou dessin) Jacquard simple formant matrice de repérage 4 de ces extrémités d'alimentation par rapport aux extrémités d'alimentation des autres faisceaux, dans lequel les extrémités d'alimentation des x premières fibres en lisière de tissu qui correspondent à un premier faisceau ressortent du côté supérieur du tissu, comme cela est illustré à la figure 2, tandis que les extrémités d'alimentation des y fibres adjacentes ressortent du côté inférieur du tissu.

On obtient donc ainsi une séparation dans l'espace des fibres des différents faisceaux, ce qui permet d'éviter un comptage manuel fastidieux des x et y fibres de chaque faisceau, ce qui serait clairement incompatible avec une production industrielle.

La figure 3 montre un tissu dans lequel tous les fils de chaîne 1 sont des fibres textiles. Les fils de trame 2 constituant le fond du tissu sont également des fibres textiles, à l'exception de certains fils de trame qui constituent un motif lumineux 5 monochrome dans le rapport de tissu, par exemple un losange, comme cela est représenté à la figure 3, et qui sont donc des fibres optiques.

Afin de différencier les extrémités d'alimentation 3 des fibres optiques constituant le dessin, des autres fils de trame, et de regrouper ces fibres optiques en un faisceau, une matrice de repérage 4 est créée. A la figure 3, on notera que la taille du dessin lumineux est inférieur à la moitié de la largeur de rapport du tissu. Ainsi, il est possible de tisser deux losanges lumineux dans la largeur de tissu.

A chacun de ces motifs lumineux correspond une matrice de repérage. Ainsi, une matrice est positionnée en lisière du tissu, et l'autre matrice est disposée dans le rapport, comme cela est représenté aux figures 3 et 4. Ici, encore, la séparation entre les extrémités d'alimentation des fibres des faisceaux par rapport aux fils de trame adjacents est possible en faisant ressortir les fibres optiques d'un côté du tissu, par exemple du côté supérieur du tissu, par rapport aux fils de trame adjacents, qui sont tissés pour ressortir du côté inférieur du tissu, comme cela est bien visible à la figure 4.

On aura noté que par commodité, et pour ne pas surcharger le dessin, la figure 3 ne montre pas les fils de trame autres que les fibres optiques constituant le dessin.

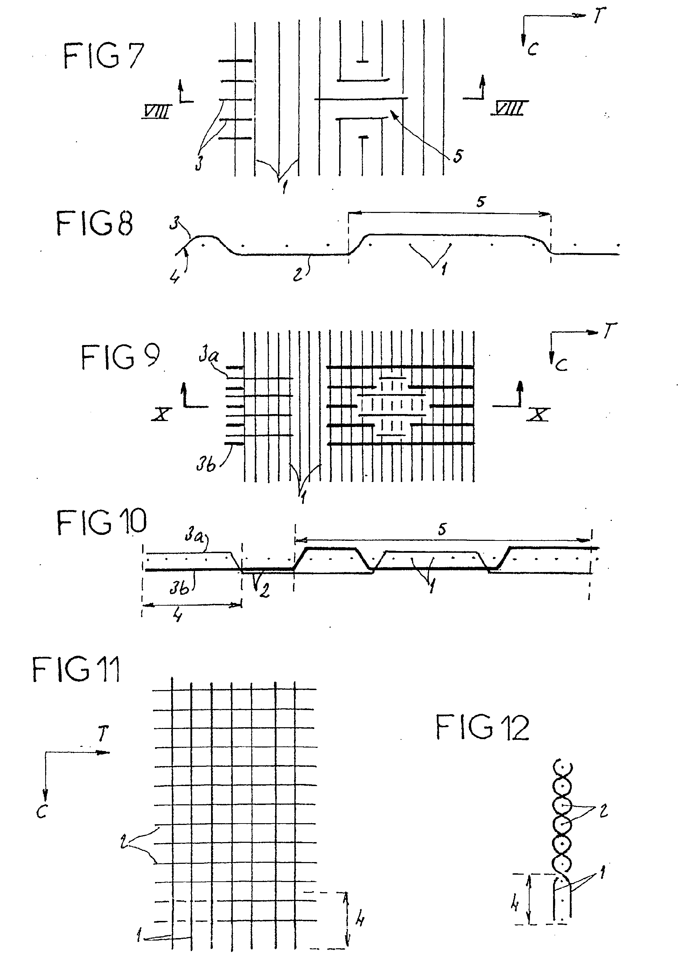

Une alternative est illustrée aux figures 7 et 8, dans lesquelles le rapport de tissu ne comprend dans sa largeur qu'un seul motif lumineux. Dans ce cas, la matrice de repérage est disposée uniquement en lisière du tissu. Ici encore, pour des raisons de lisibilité du dessin, on n'a pas représenté à la figure 7, les fils de trame autres que les fibres optiques constituant le motif lumineux 5.

La figure 5 montre une variante du tissu représenté à la figure 3, dans laquelle le motif lumineux 5 n'est pas monochrome, mais est constitué de fibres optiques de deux couleurs différentes (représentées au dessin par des traits d'épaisseur différentes). Ce motif 5 comprend un fond lumineux constitué d'une première série de fibres optiques appartenant au même faisceau, et un coeur de motif en forme de losange, constitué de fibre optiques d'une autre couleur, et appartenant à un second faisceau.

Ici encore, on n'a pas représenté les autres fils de trame (de qualité textile, donc non lumineux), pour plus de lisibilité, aux figures 5 et 6.

Ici, la matrice de repérage 4 permet d'identifier et de séparer les extrémités d'alimentation 3a des fibres optiques de la première couleur (qui seront regroupées en un premier faisceau, et ensuite connectées à une source lumineuse de la couleur correspondante à la couleur désirée pour le fond du motif), des extrémités d'alimentation 3b des fibres optiques de la seconde couleur (qui seront regroupées en second faisceau, et ensuite connectées à une source lumineuse d'une couleur correspondant à la couleur du coeur de motif).

Comme on peut le constater à la figure 6, la séparation dans l'espace des extrémités d'alimentation 3a et 3b des fibres optiques de chacun des deux faisceaux du motif lumineux 5, est, au niveau de la lisière, non seulement réalisée en tissant ces extrémités 3a et 3b de manière à les faire ressortir, les unes au-dessus, les autres au dessous du plan médian du tissu, mais également en imposant aux extrémités d'alimentation des fibres appartenant à chaque type de faisceau, de ressortir au niveau de la matrice, à une distance prédéterminée et distincte par rapport au premier fil de chaîne 6 situé entre le dessin et la matrice qui lui correspond, et adjacent à celle-ci. Ainsi, comme montré à la figure 6, les extrémités d'alimentation 3a des fibres appartenant au premier faisceau ressortent (vers le côté "dessus" du tissu) immédiatement après ce premier fil de chaîne 6, tandis que les extrémités d'alimentation 3b des fibres du second faisceau ressortent (vers le côté "dessous" du tissu) à une distance de deux fils de chaîne par rapport au fil de chaîne 6 de référence.

Une alternative de la variante d'exécution montrée aux figures 5 et 6, est illustrée aux figures 9 et 10, dans lesquelles le rapport de tissu ne comprend dans sa largeur qu'un seul motif lumineux. Dans ce cas, la matrice de repérage est disposée uniquement en lisière du tissu. Ici encore, pour des raisons de lisibilité du dessin, on n'a pas représenté, les fils de trame autres que les fibres optiques constituant le motif lumineux 5.

Les figures 11 et 12 représentent, de manière similaire aux figures 1 et 2, un tissu uni. Dans cette variante d'exécution de l'invention, les fibres optiques constituent les fils de chaîne 1, et les fils de trame 2 sont des fils textiles. On n'a volontairement pas représenté les fils de chaîne autres que les fibres optiques formant le motif lumineux, afin de ne pas surcharger le dessin.

Une matrice de repérage 4 sous forme d'un dessin Jacquard simple est constitué, qui permet de compter les extrémités d'alimentation de x fibres et de les regrouper en un premier faisceau; et de les séparer dans l'espace des extrémités d'alimentation des y fibres suivantes appartenant à un second faisceau indépendant.

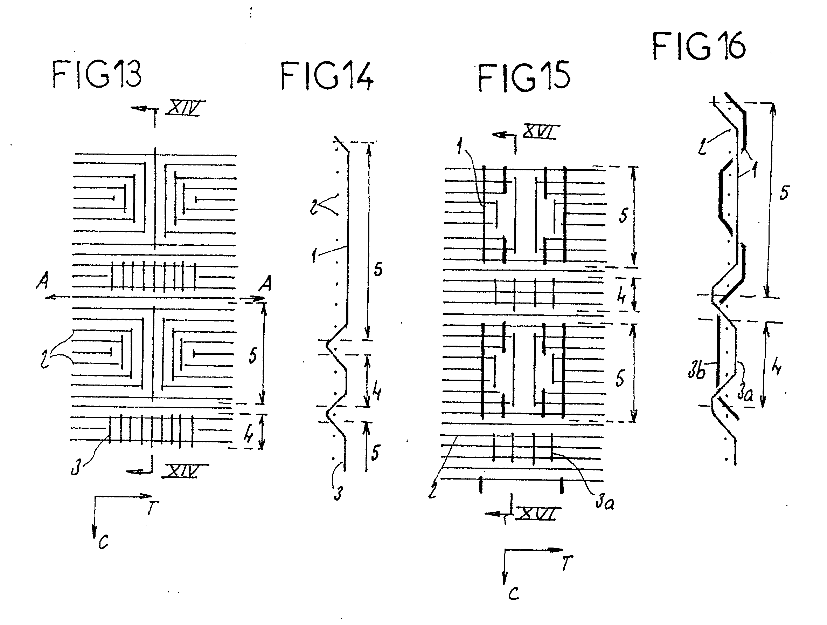

Les figures 13 et 14 représentent, de manière similaire aux figures 3 et 4, un tissu dont les fils de trame sont des fils textiles (coton, polyester, lin, soie, voire même des fils métalliques), et dont les fils de chaîne sont des fils textiles pour le fond du tissu, et des fibres optiques pour les fils formant le motif lumineux. On n'a volontairement pas représenté les fils de chaîne autres que les fibres optiques formant le motif lumineux, afin de ne pas surcharger le dessin.

Dans ce cas, les matrices de repérage 4 sous forme d'un dessin Jacquard, permettent la séparation dans l'espace des extrémités d'alimentation des fibres optiques formant chaque motif en chaîne, de loin en loin sur la longueur du tissu, par rapport aux fils de chaîne adjacents (fils textiles).

Les figures 15 et 16 représentent, un tissu similaire aux figures 5 et 6 mais dont les sens de tissage chaîne et trame sont inversés: les fils de trame 2 sont des fils textiles, et les fils de chaîne 1 sont des fils textiles pour le fond, et des fibres optiques de deux couleurs différentes pour le motif lumineux. Ici, les matrices de repérage 4 correspondant à chaque motif lumineux sont disposées de loin en loin dans le sens longueur (sens chaîne) du tissu, en amont de chaque motif auquel elles correspondent.

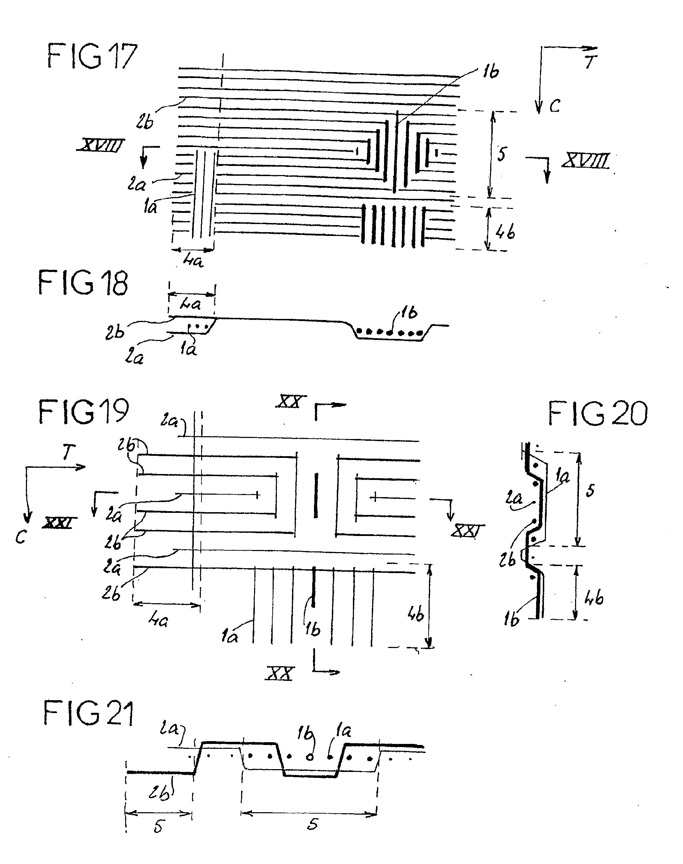

Les figures 17 et 18 représentent un tissu dans lequel les fils de trame sont des fibres optiques de même couleur, et les fils de chaîne sont de deux types : des fils textiles 1a (coton par exemple) pour le fond, et des fibres optiques 1b de même couleur pour le motif lumineux 5 (qui est un losange sur le dessin).

On n'a volontairement pas représenté les fils de chaîne textiles (c'est-à-dire autres que les fibres optiques du motif) afin de ne pas surcharger le dessin, à l'exception de trois fils textiles 1a disposés en lisière, qui montrent que les extrémités d'alimentation des fibres optiques 2a, 2b de la trame sont comptées et regroupées en différents faisceaux, grâce à une première matrice Jacquard 4a dans la lisière.

Dans le sens chaîne, une deuxième matrice 4b est également formée en aval du dessin (dans le sens de déroulement du tissu dans le métier à tisser), qui permet de compter et de regrouper en faisceaux, les fibres optiques de chaîne, formant le losange du dessin, ainsi que de séparer ces fibres optiques des fils de chaîne adjacents (fils textiles non représentés au dessin).

Enfin, les figures 19 à 21 représentent un tissu plus complexe, où un motif 5 est formé sur fond, lumineux ou non. Ce motif comprend des fibres optiques 2a, 2b en trame, de deux couleurs différentes. Il comprend également des fibres optiques 1a, 1b en chaîne, de deux couleurs différentes.

Pour le même motif lumineux, deux matrices sont donc tissées, l'une 4a en lisière, et l'autre 4b en amont du dessin (dans le sens de déroulement machine).

Dans la première matrice 4a (voir la figure 21), les extrémités d'alimentation des fibres optiques appartenant aux différents faisceaux (c'est-à-dire de couleurs différentes), sont tissées de manière à ressortir de deux côtés différents par rapport au plan médian du tissu, mais également ces extrémités d'alimentation ont des longueurs différentes par rapport au bord de la lisière.

Le même principe est appliqué à la matrice 4b en chaîne (voir figure 20).

Il est à noter que dans tous les exemples précédents, on a représenté une matrice de repérage correspondant à chaque motif lumineux (par exemple un losange) distinct. On suppose alors que les fibres optiques en trame et/ou en chaîne, correspondant à chaque motif, sont connectées à des sources lumineuses indépendantes. Par exemple dans le cas du tissu de la figure 13, une telle indépendance de connexion lumineuse des différents motifs de loin en loin dans la longueur du tissu, permettra de découper le tissu dans sa largeur entre deux motifs (voir la ligne de découpe "A-A" à la figure 13), en s'assurant que tous les motifs puissent néanmoins être ensuite séparément connectés chacun à une source lumineuse propre.

Il est néanmoins tout à fait envisageable de tisser une seule matrice de repérage commune à plusieurs motif lumineux espacés de loin en loin dans la largeur (sens trame) du tissu, ou dans sa longueur (sens chaîne du tissu). Par exemple, si un même motif est répété plusieurs fois dans la largeur du tissu, on pourra n'avoir qu'une seule matrice de repérage en lisière du tissu. Dans un tel cas, la connexion des fibres appartenant au(x) faisceau(x) optiques correspondant à ces motifs sera réalisée vers la même source. L'éclairage de tous ces motifs, en tout cas pour les fibres optiques disposées en trame, sera simultané.

En outre, on aura compris à l'aide des exemples précédents que, en chaîne et/ou en trame, selon la largeur d'un motif lumineux, les fibres optiques du même type (c'est-à-dire de la même couleur et intensité) tissées pour ce motif pourront être regroupées en un seul faisceau, ou devront être divisées en plusieurs faisceaux, et la fonction de la matrice de repérage variera.

Ainsi, si un motif lumineux fait intervenir un nombre de fibres optiques du même type, en chaîne ou en trame, inférieur au nombre maximum de fibres pouvant être connectées simultanément à une même source lumineuse, la matrice de repérage correspondante servira à distinguer les fibres optiques du faisceau, des fils textiles adjacents de chaîne et/ou de trame.

Dans le cas où la taille du motif lumineux requiert un nombre de fibres optiques en chaîne et/ou en trame, supérieur au nombre maximum de fibres pouvant être connectées à la même source lumineuse, la matrice de repérage servira à distinguer, non seulement les fibres optiques des autres types de fils, mais également à distinguer les fibres optiques entre elles, pour permettre de les répartir entre les différents faisceaux correspondants.

Bien sûr, si un motif lumineux comprend des fibres optiques de couleurs et/ou intensité différentes, la matrice de repérage correspondante servira également à distinguer les fibres types différents, pour permettre après tissage, de les connecter aux sources lumineuses correspondantes.

Il va de soi que l'invention n'est pas limitée aux seules formes d'exécution décrites ci-dessus à titre d'exemples non limitatifs. Elle en embrasse au contraire toutes les variantes.

## Revendications

1. Procédé de tissage d'un tissu comportant, au moins pour partie, des fibres optiques comme fils de chaîne (1, 1a, 1b) et/ou de trame (2, 2a, 2b), lesdites fibres optiques étant traitées de manière à laisser diffuser la lumière sensiblement perpendiculairement à leur axe longitudinal, et au moins dans leurs portions situées du côté extérieur du tissu, **caractérisé en ce qu'**il comprend le tissage d'un motif Jacquard (4, 4a, 4b) formant matrice de séparation et d'identification, par rapport aux fils adjacents, des extrémités d'alimentation (3, 3a, 3b) d'un nombre prédéterminé de fibres optiques destinées à être regroupées en faisceau et connectées à la même source lumineuse.

2. Procédé de tissage selon la revendication 1, **caractérisé en ce que** le tissage Jacquard des extrémités d'alimentation (3, 3a, 3b) de chaque faisceau de fibres optiques tissées en trame, fait ressortir les extrémités d'alimentation de ces fibres d'un côté prédéterminé et distinct du tissu par rapport aux fils adjacents, et/ou à une distance prédéterminée et distincte du premier fil de chaîne situé entre un dessin et la matrice qui lui correspond, et adjacent à celle-ci.

3. Procédé de tissage selon les revendications 1 ou 2, **caractérisé en ce que** le tissage Jacquard des extrémités d'alimentation (3, 3a, 3b) de chaque faisceau de fibres optiques tissées en chaîne, fait ressortir les extrémités d'alimentation de ces fibres d'un côté prédéterminé et distinct du tissu par rapport aux fils adjacents, et/ou à une distance prédéterminée et distincte du premier fil de trame situé en amont de la matrice et adjacent à celle-ci.

4. Procédé de tissage selon l'une quelconque des revendications 1 à 3, **caractérisé en ce qu'**il comporte en outre, après l'étape de tissage, les étapes consistant, dans l'ordre, à:
(i) réaliser un regroupement des extrémités d'alimentation de fibres optiques pour chaque faisceau particulier présent dans le tissu, puis
(ii) réaliser un sertissage des extrémités d'alimentation pour chaque faisceau, puis
(iii) réaliser une découpe des extrémités d'alimentation pour chaque faisceau, à l'aide d'un couteau chaud, puis
(iv) réaliser une connexion de chaque faisceau de fibres optiques à une source lumineuse.

5. Tissu comportant, au moins pour partie, des fibres optiques comme fils de chaîne (1, 1a, 1b) et/ou de trame (2, 2a, 2b), lesdites fibres optiques étant traitées après leur tissage de manière à laisser diffuser la lumière sensiblement perpendiculairement à leur axe longitudinal, et au moins dans leurs portions situées du côté extérieur du tissu, le tissu comportant en outre dans sa chaîne et/ou dans sa trame, au moins un faisceau d'un nombre prédéterminé de fibres optiques destinées à être connectées à une source lumineuse commune par leurs extrémités d'alimentation (3, 3a, 3b), **caractérisé en ce qu'**il comporte également des moyens (4, 4a, 4b) de repérage et de séparation, par rapport aux fils adjacents, des extrémités d'alimentation des fibres optiques dudit faisceau, ces moyens consistant en un motif Jacquard formant matrice de séparation et d'identification, par rapport aux fils adjacents, des extrémités d'alimentation (3, 3a, 3b) d'un nombre prédéterminé de fibres optiques destinées à être regroupées en faisceau et connectées à la même source lumineuse.

6. Tissu selon la revendication 5, **caractérisé en ce que** les moyens de repérage et de séparation des extrémités d'alimentation (3, 3a, 3b) des fibres optiques tissées en chaîne formant chaque faisceau, par rapport aux fils adjacents du tissu, consistent en un motif Jacquard (4, 4b) dans le dessin de tissu, formant matrice de repérage des fibres appartenant à chaque faisceau, motif tissé à partir des portions d'alimentation du faisceau de telle manière que ces dernières ressortent d'un côté du tissu prédéterminé et distinct du côté où ressortent les fils de chaîne adjacents, et/ou à une distance prédéterminée et distincte du premier fil de trame situé en aval de la matrice et adjacent à celle-ci.

7. Tissu selon les revendications 5 ou 6, **caractérisé en ce que** les moyens de repérage et de séparation des faisceaux de fibres optiques tissés en chaîne formant chaque faisceau, par rapport aux fils adjacents du tissu, consistent en un motif Jacquard dans le dessin de tissu, formant matrice de repérage des fibres appartenant à chaque faisceau, les portions d'alimentation étant tissées dans la matrice de repérage, chacune avec un fil textile de chaîne adjacent, de couleur prédéterminée, chaque couleur de fil de chaîne correspondant à un faisceau particulier de fibres optiques.

8. Tissu selon la revendication 5, **caractérisé en ce que** les moyens de repérage et de séparation des différents faisceaux de fibres optiques tissés en trame formant chaque faisceau, par rapport aux fils adjacents du tissu, consistent en un motif Jacquard (4, 4a) dans le dessin de tissu, et/ou en lisière du tissu, formant matrice de repérage des fibres appartenant à chaque faisceau, motif tissé à partir des portions d'alimentation du faisceau de telle manière que ces dernières ressortent d'un côté du tissu prédéterminé et distinct du côté où ressortent les fils de trame adjacents, et/ou à une distance prédéterminée et distincte du premier fil de chaîne situé entre le dessin et la matrice qui correspond à ce dessin, et adjacent à celle-ci.

9. Tissu selon les revendications 5 ou 8, **caractérisé en ce que** les moyens de repérage et de séparation des faisceaux de fibres optiques tissés en trame formant chaque faisceau, par rapport aux fils adjacents du tissu, consistent en un motif Jacquard (4, 4a) dans le dessin de tissu et/ou en lisière du tissu, formant matrice de séparation des fibres appartenant à chaque faisceau, les portions d'alimentation étant tissées dans la matrice de repérage, chacune avec un fil textile de trame adjacent, de couleur prédéterminée, chaque couleur de fil de trame correspondant à un faisceau particulier de fibres optiques.

## Patentansprüche

1. Verfahren zum Weben eines Gewebes, das zumindest zum Teil optische Fasern als Kettfäden (1, 1a, 1b) und/oder Schussfäden (2, 2a, 2b) umfasst, wobei die optischen Fasern behandelt sind, um das Licht im Wesentlichen senkrecht zu ihrer Längsachse und zumindest an ihren an der Außenseite des Gewebes befindlichen Teilen diffundieren zu lassen, **dadurch gekennzeichnet, dass** es das Weben einer eine Trenn- und Identifikationsmatrix im Verhältnis zu angrenzenden Fäden bildenden Jacquardmusterung (4, 4a, 4b) von Einspeisungsenden (3, 3a, 3b) einer vorbestimmten Anzahl von optischen Fasern umfasst, die dazu bestimmt sind, zu Bündeln umgruppiert und an dieselbe Lichtquelle angeschlossen zu werden.

2. Webverfahren nach Anspruch 1, **dadurch gekennzeichnet, dass** das Jacquard-Verweben der Einspeisungsenden (3, 3a, 3b) jedes Bündels von im Schuss verwebten optischen Fasern die Einspeisungsenden dieser Fasern auf einer vorbestimmten und unterschiedlichen Seite des Gewebes im Verhältnis zu angrenzenden Fäden und/oder in einem vorbestimmten und unterschiedlichen Abstand vom ersten Kettfaden wieder austreten lässt, der sich zwischen einem Muster und der ihm entsprechenden Matrix und angrenzend an diese befindet.

3. Webverfahren nach Anspruch 1 oder 2, **dadurch gekennzeichnet, dass** das Jacquard-Verweben der Einspeisungsenden (3, 3a, 3b) jedes Bündels von in Kette verwebten optischen Fasern die Einspeisungsenden dieser Fasern auf einer vorbestimmten und unterschiedlichen Seite des Gewebes im Verhältnis zu angrenzenden Fäden und/oder in einem vorbestimmten und unterschiedlichen Abstand vom ersten Schussfaden wieder austreten lässt, der sich der Matrix vorgeordnet und angrenzend an diese befindet.

4. Webverfahren nach einem der Ansprüche 1 bis 3, **dadurch gekennzeichnet, dass** es nach dem Webschritt darüber hinaus die Schritte umfasst, die in der Reihenfolge darin bestehen:
(i) eine Umgruppierung der Einspeisungsenden der optischen Fasern für jedes einzelne im Gewebe vorhandene Bündel durchzuführen, dann
(ii) ein Fassen der Einspeisungsenden für jedes Bündel durchzuführen, dann
(iii) ein Abschneiden der Einspeisungsenden für jedes Bündel mittels eines heißen Messers durchzuführen, dann
(iv) einen Anschluss jedes Bündels der optischen Fasern an eine Lichtquelle herzustellen.

5. Gewebe, das zumindest zum Teil optische Fasern als Kettfäden (1, 1a, 1b) und/oder Schussfäden (2, 2a, 2b) umfasst, wobei die optischen Fasern nach ihrem Verweben behandelt sind, um das Licht im Wesentlichen senkrecht zu ihrer Längsachse und zumindest an ihren an der Außenseite des Gewebes befindlichen Teilen diffundieren zu lassen, wobei das Gewebe darüber hinaus in seiner Kette oder seinem Schuss mindestens ein Bündel mit einer vorbestimmten Anzahl an optischen Fasern umfasst, die dazu bestimmt sind, über ihre Einspeisungsenden (3, 3a, 3b) an eine gemeinsame Lichtquelle angeschlossen zu werden, **dadurch gekennzeichnet, dass** es auch Mittel (4, 4a, 4b) zum Orten und Trennen der Einspeisungsenden der optischen Fasern des Bündels im Verhältnis zu angrenzenden Fäden umfasst, wobei diese Mittel aus einer eine Trenn- und Identifikationsmatrix im Verhältnis zu angrenzenden Fäden bildenden Jacquardmusterung von Einspeisungsenden (3, 3a, 3b) einer vorbestimmten Anzahl von optischen Fasern bestehen, die dazu bestimmt sind, zu Bündeln umgruppiert und an dieselbe Lichtquelle angeschlossen zu werden.

6. Gewebe nach Anspruch 5, **dadurch gekennzeichnet, dass** die Mittel zum Orten und Trennen der Einspeisungsenden (3, 3a, 3b) der jedes Bündel bildenden, kettgewebten optischen Fasern im Verhältnis zu angrenzenden Fäden des Gewebes aus einer Jacquardmusterung (4, 4b) im Gewebemuster bestehen, die eine Matrix zum Orten der zu jedem Bündel gehörenden Fasern bildet, wobei die Musterung ausgehend von Einspeisungsabschnitten des Bündels so gewebt ist, dass diese Letztgenannten auf einer vorbestimmten und von der Seite unterschiedlichen Seite, wo die angrenzenden Kettfäden wieder austreten und/oder in einem vorbestimmten und unterschiedlichen Abstand vom ersten Schussfaden wieder austreten, der sich der Matrix nachgeordnet und angrenzend an diese befindet.

7. Gewebe nach den Ansprüchen 5 oder 6, **dadurch gekennzeichnet, dass** die Mittel zum Orten und Trennen der Bündel von jedes Bündel bildenden in Kette gewebten optischen Fasern im Verhältnis zu angrenzenden Fäden des Gewebes aus einer Jacquardmusterung im Gewebemuster bestehen, die eine Matrix zum Orten der zu jedem Bündel gehörenden Fasern bildet, wobei die Einspeisungsabschnitte in die Matrix zum Orten jeweils mit einem angrenzenden textilen Kettfaden einer vorbestimmten Farbe eingewebt sind, wobei jede Kettfadenfarbe einem bestimmten Bündel optischer Fasern entspricht.

8. Gewebe nach Anspruch 5, **dadurch gekennzeichnet, dass** die Mittel zum Orten und Trennen der verschiedenen Bündel von jedes Bündel bildenden in Schuss gewebten optischen Fasern im Verhältnis zu den angrenzenden Fäden des Gewebes aus einer Jacquardmusterung (4, 4a) im Gewebemuster und/oder am Rand des Gewebes bestehen, die eine Matrix zum Orten der zu jedem Bündel gehörenden Fasern bildet, wobei die Musterung ausgehend von Einspeisungsabschnitten des Bündels so gewebt ist, dass diese Letztgenannten auf einer vorbestimmten und von der Seite unterschiedlichen Seite, wo die angrenzenden Schussfäden wieder austreten, und/oder in einem vorbestimmten und unterschiedlichen Abstand vom ersten Kettfaden wieder austreten, der sich zwischen dem Muster und der Matrix, die diesem Muster entspricht, und angrenzend an diese befindet.

9. Gewebe nach den Ansprüchen 5 oder 8, **dadurch gekennzeichnet, dass** die Mittel zum Orten und Trennen der Bündel von jedes Bündel bildenden in Schuss gewebten optischen Fasern im Verhältnis zu den angrenzenden Fäden des Gewebes aus einer Jacquardmusterung (4, 4a) im Gewebemuster und/oder am Rand des Gewebes bestehen, die eine Matrix zum Trennen der zu jedem Bündel gehörenden Fasern bildet, wobei die Einspeisungsabschnitte in die Matrix zum Orten jeweils mit einem angrenzenden textilen Schussfaden einer vorbestimmten Farbe eingewebt sind, wobei jede Schussfadenfarbe einem bestimmten Bündel optischer Fasern entspricht.

## Claims

1. A method for weaving fabric at least partly containing optical fibers as warp (1, 1a, 1b) and/or weft (2, 2a, 2b) threads, said optical fibers being treated in such a way that they enable light to be diffused more or less perpendicularly to the longitudinal axis thereof and at least in the sections thereof located on the outer side of the fabric, wherein the method comprises the weaving of a Jacquard motif (4, 4a, 4b) forming a visual matrix separating and identifying, relative to the adjacent threads, the input ends (3, 3a, 3b) of a predetermined number of optical fibers intended to be grouped in bundles and connected to the same light source.

2. A weaving method as claimed in claim 1, wherein the Jacquard weaving of the input ends (3, 3a, 3b) of each bundle of optical fibers woven as weft causes the input ends of each bundle of the fibers to emerge on one predetermined side of the fabric distinct from that where the adjacent threads emerge, and/or at a predetermined, distinct distance from the first warp thread located between a pattern and the matching matrix and adjacent to said matrix.

3. A weaving method as claimed in claim 1, wherein the Jacquard weaving of the input ends (3, 3a, 3b) of each bundle of optical fibers woven as warp causes the input ends of these fibers to emerge on one predetermined side of the fabric distinct from that where the adjacent threads emerge, and/or at a predetermined, distinct distance from the first weft thread located upstream of the matrix and adjacent to said matrix.

4. A weaving method as claimed in claim 1, further comprising the following post-weaving stages in the following order:
(i) bringing together the input ends of the optical fibers of each individual bundle present in the fabric, then
(ii) crimping the input ends of each bundle, then
(iii) using a hot knife to cut off the input ends of each bundle, then
(iv) connecting each bundle of optical fibers to a light source.

5. A fabric at least partly comprising optical fibers as warp threads and/or weft threads, said optical fibers being treated after weaving in such a way that they enable light to be diffused more or less perpendicularly to their longitudinal axis and at least in the sections located on the outer side of the fabric, furthermore the fabric comprising in the warp and/or in the weft at least one bundle of a predetermined number of optical fibers intended to be connected to a common light source by their input ends(3, 3a, 3b), and wherein the fabric also comprises means (4, 4a, 4b) for identifying and separating the input ends of the optical fibers of said bundle relative to the adjacent threads, these means consisting of a Jacquard motif (4, 4a, 4b) forming a visual matrix separating and identifying, relative to the adjacent threads, the input ends (3, 3a, 3b) of a predetermined number of optical fibers intended to be grouped in bundles and connected to the same light source.

6. A fabric as claimed in claim 5, wherein the means for identifying and separating the input ends of the optical fibers woven as warp forming each bundle, relative to the adjacent threads, consist of a Jacquard motif in the pattern of the fabric, forming an identification matrix for the fibers belonging to each bundle, said pattern being woven from input sections of the bundle such that the input sections emerge on one predetermined side of the fabric distinct from that where the adjacent warp threads emerge, and/or at a predetermined, distinct distance from the first weft thread located downstream of the matrix and adjacent to said matrix.

7. A fabric as claimed in one of claims 5 or 6, wherein the means for identifying and separating the bundles of optical fibers woven as warp, relative to the adjacent threads of the fabric, consist of a Jacquard motif in the pattern of the fabric, forming an identification matrix for the fibers belonging to each bundle, the input sections being woven into the identification matrix, each with an adjacent textile warp thread of a predetermined color, each warp thread color belonging to a particular bundle of optical fibers.

8. A fabric as claimed in claim 5, wherein the means for identifying and separating the different bundles of optical fibers woven as weft, relative to the adjacent threads of the fabric, consist of a Jacquard motif in the pattern of the fabric and/or in the selvedge of the fabric, forming an identification matrix for the fibers belonging to each bundle, the pattern being woven from the input sections of the bundle such that the fibers emerge on one predetermined side of the fabric distinct from that where the adjacent weft threads emerge, and/or at a predetermined, distinct distance from the first warp thread located between the pattern and the matrix belonging to said pattern and adjacent to said matrix.

9. A fabric as claimed in one of claims 5 or 8, wherein the means for identifying and separating bundles of optical fibers woven as weft, relative to the adjacent threads of the fabric, consist of a Jacquard motif in the pattern of the fabric and/or in the selvedge of the fabric, forming a separation matrix for the fibers belonging to each bundle, the input sections being woven into the identification matrix, each with a textile weft thread of a predetermined color, each weft thread color belonging to a particular bundle of optical fibers.
